# EUROPÄISCHE PATENTANMELDUNG

(11) **EP 2 302 398 A1**
(43) Veröffentlichungstag der Anmeldung: **30.03.2011**
(21) Anmeldenummer: 10178867.7
(22) Anmeldetag: 23.09.2010
(51) Int. Cl.: G01P 1/12, G07C 7/00

(54) **Tachographenanordnung für ein Fahrzeug und Sensoranordnung für einen Tachographen**

(30) Priorität: 25.09.2009 DE 102009042958
(71) Anmelder: Continental Automotive GmbH, 30165 Hannover (DE)
(72) Erfinder: Schmidt, Gunnar, 78052, Villingen-Schwenningen (DE)

(57) **Zusammenfassung**

Es wird eine Sensoranordnung für einen Tachographen bzw. eine Tachographenanordnung für ein Fahrzeug mit einem Tachographen und einer Sensoranordnung zum Erfassen eines Zustands des Fahrzeugs, die einen Sensor zum Detektieren eines Parameters des Fahrzeugs und Erzeugen eines über eine analoge Signalleitung an den Tachographen zu übertragendes Echtzeitsignals und eine Bearbeitungsvorrichtung zur Erzeugung von über eine Datenleitung an den Tachographen zu übertragenden Datensignalen aus dem Sensorsignal aufweist, vorgeschlagen. In der Sensoranordnung ist ein zweiter Sensor (3) benachbart zum ersten Sensor (2) angeordnet, der unabhängig vom ersten Sensor (2) ist und auf einem zum ersten Sensor (2) unterschiedlichen Erfassungsprinzip arbeitet und dessen Signale über eine zusätzliche Leitung (17) oder die Datenleitung (12) an den Tachographen (10) übertragbar ist.

## Beschreibung

Die Erfindung betrifft eine Tachographenanordnung nach dem Oberbegriff des Hauptanspruchs und eine Sensoranordnung für einen Tachographen nach dem Oberbegriff des unabhängigen Nebenanspruchs.

Eine Tachographenanordnung, wie sie aus der EP 0 829 069 B1 bekannt ist, weist einen Impulsgeber und ein Kontrollgerät auf, wobei der Impulsgeber ein Sensorelement zur Erzeugung eines modulierten elektrischen Signals proportional zur Fahrzeuggeschwindigkeit enthält. Der Impulsgeber weist eine Schaltungsanordnung zur Signalaufbereitung auf, die aus dem vom Sensorelement erzeugten Signalen eine Folge von Rechteckimpulsen formt. Weiterhin umfasst der Impulsgeber eine Kodierschaltung zur Verschlüsselung der Rechteckimpulse, die gegebenenfalls in einem Speicher gespeichert werden können. Der Impulsgeber und das Kontrollgerät sind durch eine Signalleitung und eine Datenleitung miteinander verbunden, wobei die analoge Signalleitung das Signal des Sensorelements unverschlüsselt und die Datenleitung die verschlüsselten Signale an das Kontrollgerät überträgt. Das Kontrollgerät umfasst eine Logik zur Entschlüsselung der empfangnen verschlüsselten Signale und einen Vergleicher, der das entschlüsselte Signal mit dem über die Signalleitung übertragenen Signal zur Überprüfung der Unverfälschtheit in Bezug auf einen definierten Zeitraum vergleicht.

Bei dieser bekannten Tachographenanordnung werden das über die Signalleitung gelieferte Sensorsignal und das über die Datenleitung gesendete verschlüsselte und/oder bearbeitete Sensorsignal von einem einzigen Sensor erzeugt. Um eine Manipulation an der Tachographenanordnung besser zu erkennen, soll ein zweites, unabhängiges Signal zur Überprüfung des über den Signalpfad gelieferten Sensorsignals zur Verfügung gestellt werden.

Grundsätzlich ist es bekannt, einen oder mehrere unabhängige Sensoren extern vorzusehen, deren Signale bzw. Signale, die ohnehin im Fahrzeug vorhanden sind, dem Tachographen z.B. über das CAN-Netzwerk für ihre Verarbeitung zur Verfügung zu stellen. Beispielsweise wird in der EP 0 638 877 B1 ein Beschleunigungssensor, der im Tachographen integriert wird und erkennt, ob das Fahrzeug fährt oder nicht, bzw. dessen Geschwindigkeit ermittelt, beschrieben. Andere Lösungen offenbaren einen internen oder auch externen GPS-Empfänger, aus dessen Positionsdaten die Geschwindigkeit abgeleitet werden kann, um damit das Tachographensensorsignal zu plausibilisieren (DE 10 2006 0402 97 A1 oder DE 10 2006 0360 66 A1).

Der Erfindung liegt die Aufgabe zugrunde, eine Tachographenanordnung und eine Sensoranordnung für einen Tachographen zu schaffen, denen ein zweites, unabhängiges Signal, d.h. ein Signal, das nicht auf dem Signal des ersten Sensors beruht, zur Verfügung gestellt wird, und die kompatibel zu einem Tachographengerät entsprechend der EP 0 829 069 B1 sind, das entsprechend einem internationalen Standard (ISO 16844-3) standardisiert ist, wobei die Schnittstelle zwischen Sensor und Tachograph nicht oder nur im geringen Umfang angepasst werden muss.

Diese Aufgabe wird erfindungsgemäß durch die kennzeichnenden Merkmale der unabhängigen Ansprüche in Verbindung mit ihren Oberbegriffen gelöst.

Dadurch, dass die Sensoranordnung einen zweiten Sensor benachbart zum ersten Sensor aufweist, der unabhängig vom ersten Sensor ist und auf einem zum ersten Sensor unterschiedlichen Erfassungsprinzip arbeitet und über eine zusätzliche Leitung oder die Datenleitung übertragbar ist, wird ein zweites unabhängiges Signal dem Tachographen zur Verhinderung bzw. Reduzierung von Manipulationen mit einer völlig eigenständigen und unabhängigen Signalaufbereitung und Signalauswertung zur Verfügung gestellt, wobei keine zusätzlichen Komponenten notwendig sind, d.h. die Tachographenanordnung auf Tachograph und Sensoranordnung bzw. Geber beschränkt bleibt. Weiterhin sind die Schnittstellen kompatibel zu der standardisierten Tachographenanordnung und es müssen keine neuen Schnittstellen, z.B. zum ABS-System oder zur Motorsteuerung vorgesehen werden. Es müssen keine fremden Komponenten in die Sicherheitsanordnungen des standardisierten Tachographengeräts eingebunden werden und es sind auch keine Änderungen bei den Herstellern in den Produktionsprozessen oder deren Fahrzeugarchitekturen notwendig.

Durch die in den Unteransprüchen angegebenen Maßnahmen sind vorteilhafte Weiterbildungen und Verbesserungen möglich.

In bevorzugter Weise ist der zweite Sensor als akustischer Sensor wie ein Mikrophon oder als Schwingungssensor ausgebildet, während der erste Sensor ein als Wege- oder Drehzahlsensor ausgebildeter Magnetfeldsensor ist. Dadurch, dass die Sensoren auf völlig unterschiedlichen Erfassungsprinzipien arbeiten, wird die Manipulationssicherheit weiter erhöht.

Vorzugsweise umfasst die Bearbeitungsvorrichtung eine Verschlüsselungseinheit, durch die die Signale des ersten und/oder zweiten Sensors bzw. die bearbeiteten Signale des ersten Sensors verschlüsselt werden können, um die Manipulationssicherheit zu erhöhen.

In einem bevorzugten Ausführungsbeispiel weist die Bearbeitungsvorrichtung eine Zähleinheit zum Erzeugen eines Inkrements der impulsweisen Sensorsignale des ersten Sensors über einen vorgegebenen Zeitraum auf, wodurch dem Tachographen ein modifiziertes Sensorsignal zum Vergleich bzw. zur Plausibilisierung mit den analogen Signalen des ersten Sensors zur Verfügung steht, was ebenfalls die Manipulationssicherheit verbessert.

Vorteilhafterweise und je nach Anforderungen kann eine Vergleichs- oder Plausibilisierungseinheit zum Vergleich bzw. zur Plausibilisierung der ersten Sensorsignale und der zweiten Sensorsignale bzw. von diesen abgeleiteten Sensorsignalen entweder in der Sensoranordnung oder in dem Tachographen vorgesehen sein.

In einem vorteilhaften Ausführungsbeispiel kann der zweite Sensor, der als akustischer oder Schwingungssensor ausgebildet sein kann, mit einer Signalverarbeitungseinheit verbunden sein, die abhängig von dem vom zweiten Sensor aufgenommenen Signal, z.B. seinem Pegel über einen Frequenzbereich oder bei einer gewählten Frequenz, ein Signal "Fahrt/keine Fahrt" erzeugt, z.B. durch Vergleich mit einem Schwellenwert, wobei das erzeugte Signal über einen getrennten Signalpfad oder über die Datenleitung an den Tachographen übertragbar ist.

Besonders vorteilhaft ist, dass die Sensoranordnung in einem Speicher eine von dem zweiten Sensor erzeugte Geräusch- oder Schwingungscharakteristik als Referenzcharakteristik speichert, die mit aktuell erfassten Geräusch- oder Schwingungscharakteristika vergleichbar ist und bei Abweichung ein Fehlersignal erzeugbar ist, da über das individuelle Geräusch bzw. die individuellen Schwingungen oder Vibrationen des Getriebes des Fahrzeugs eine Art elektronischer Plombe realisiert werden kann. Die Referenzcharakteristik wird nach einem so genannten "Anlernen" gespeichert und der Geber oder die Sensoranordnung funktioniert dann nur noch mit "seinem" zugeordneten Getriebe.

Ausführungsbeispiele der Erfindung sind in der Zeichnung dargestellt und werden in der nachfolgenden Beschreibung näher erläutert. Es zeigen
- Fig. 1: eine schematische Darstellung des Aufbaus einer Sensoranordnung nach einem ersten Ausführungsbei- spiel der Erfindung und
- Fig. 2: eine schematische Darstellung des Aufbaus einer Sensoranordnung nach einem zweiten Ausführungsbei- spiel.

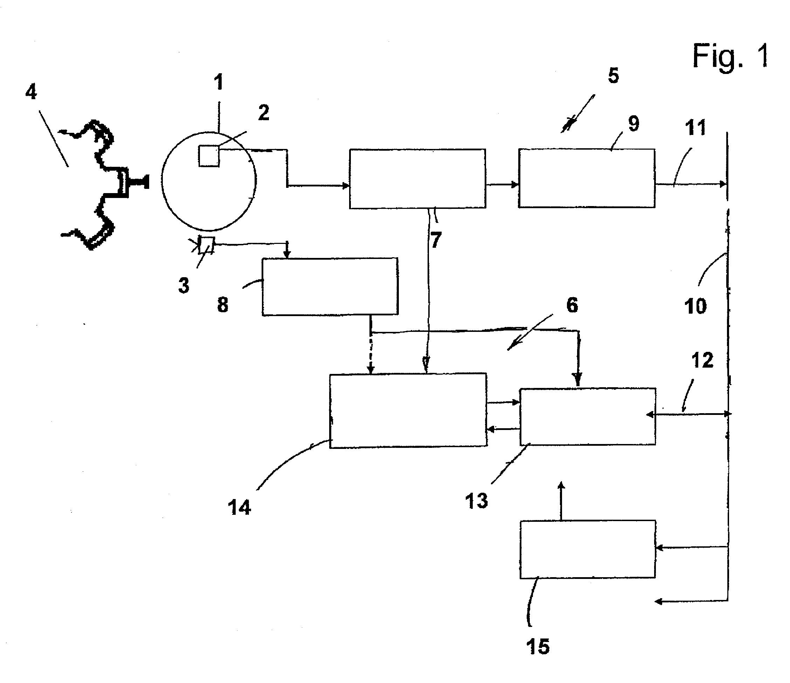

Die in der Fig. 1 dargestellte Sensoranordnung umfasst einen Sensorkopf 1 mit einem ersten Sensor oder Sensorelement 2. Benachbart zu dem Sensorelement 2, das als Hallelement ausgebildet sein kann, ist ein akustischer Sensor 3, beispielsweise eine Mikrofon angeordnet, in der Figur ist dieser Sensor 3 getrennt vom Sensorkopf angeordnet, er sollte jedoch so nahe wie möglich am Sensorelement 2 angeordnet werden, damit beide Sensoren 2, 3 in etwa gleiche Erfassungsbedingungen haben und so kann der Sensor 3 auch im Sensorkopf 1 integriert sein. Der Sensorkopf 1 bzw. die Sensoren 2, 3 sind einem Antriebsrad 4 zugeordnet, das üblicherweise ein mit dem Getriebe des Fahrzeugs verbundenes Abtastrad ist und eine Mehrzahl von Zähnen aufweist. Das Sensorelement 2 erzeugt durch die hervorspringenden und zurückgesetzten Teile bzw. die Zähne des Antriebsrades 4 hervorgerufenen Änderung des Magnetfeldes ein impulsförmiges Signal. Diese Impulsfolge ist ein Maß für die Drehzahl des Getriebes und somit für die Geschwindigkeit und für den zurückgelegten Weg.

Das Mikrofon 3 erfasst die Geräusche im Umfeld des Getriebes, die sich in einem Frequenzspektrum niederschlagen. Die Sensoren 2, 3 sind jeweils mit einer Signalaufbereitung 7, 8 verbunden, wobei die Signalaufbereitung 7 ein Impulsformer ist, der aus den verschliffenen Impulssignalen des Sensorelements 2 Rechteckimpulse formt. Die Signalaufbereitung 7 ist Bestandteil eines ersten Signalpfades 5, der aus dem Sensorelement 2, der Signalaufbereitung 7 und Schnittstelle 9, die die Rechteckimpulsfolge für die Übertragung an eine Schnittstelle 10 eines Tachographen bereitstellt, die durch die senkrechte Linie angedeutet ist und zur Vereinfachung im Folgenden mit Tachograph 10 bezeichnet wird. Am Ausgang 11 der Schnittstelle 9 wird somit ein Echtzeitsignal als Wegeimpulse zur Verfügung gestellt, die proportional zur Geschwindigkeit bzw. Drehzahl des Getriebes sind.

Das Signal des Mikrofons bzw. des akustischen Sensors 3 wird in der Signalaufbereitung 8 derart verarbeitet, dass an ihrem Ausgang ein Signal ansteht, das Aussagen drüber gestattet, ob das Fahrzeug fährt oder nicht fährt (Fahrt, keine Fahrt). Dabei kann die Amplitude bzw. der Pegel des Signals des Mikrofons bei einem Frequenzbereich oder einer Frequenz mit einem vorher festgelegten Schwellenwert verglichen, und abhängig vom Vergleich ein digitales Signal, beispielsweise Spannung aus oder Spannung ein, erzeugt werden. Die Signalaufbereitung 8 ist Bestandteil eines zweiten Signalpfades 6, der das Mikrofon 3, die Signalaufbereitung 8, eine Bearbeitungseinheit 14 und eine digitale Schnittstelle 13 aufweist. Die Bearbeitungseinheit 14 empfängt die Rechtecksignale des Sensorelements 2 von der Signalaufbereitung und wandelt sie zusammen mit der Schnittstelle 13 in digitale Datensignale um, die am Datenausgang 12 anstehen und an den Tachographen 10 übertragen werden. Die einfachste Ausführung wäre somit die Rechtecksignale als Datensignal am Ausgang 12 zur Verfügung zu stellen. Im vorhandenen Ausführungsbeispiel beinhaltet jedoch die Bearbeitungseinheit 14 eine Zählschaltung und eine Verschlüsselungslogik, wobei die Zählschaltung die Rechteckimpulse innerhalb eines vorgegebenen Zeitraums zählt und somit ein erstes Inkrement bildet, der dem Zählerstand am Ende des vorgegebenen Zeitraums entspricht. Dieses Inkrement wird jeweils von der Verschlüsselungslogik verschlüsselt, wobei dazu ein der Sensoranordnung zugeordneter Schlüssel in der Bearbeitungseinheit 14 gespeichert ist. Das verschlüsselte Inkrement wird der Schnittstelle 13 zugefügt und es wird das Datensignal am Ausgang 12 erzeugt. Der Ausgang 12 dient gleichzeitig als Eingang für Datensignale von dem nicht näher beschriebenen Tachographen, der wie in der EP 0 829 069 B1 ausgebildet sein kann. Der Tachograph kann somit beispielsweise das Inkrement als Datensignal anfordern, wenn eine Berechnung vorgenommen werden soll. Auch zwischen der Bearbeitungseinheit 14 und der Schnittstelle 13 gibt es einen bidirektionalen Datenaustausch.

Im vorliegenden Ausführungsbeispiel wird das Signal des Mikrofons der Schnittstelle 13, d.h. das Signal "Fahrt/keine Fahrt" zugeführt und die Schnittstelle 13 integriert dieses Signal in das auszusendende Datensignal z.B. als Datenbit oder Flag. Das integrierte Mikrofonsignal kann dann auf Anfrage des Tachographen für das Inkrement automatisch mitgesendet werden oder in regelmäßigen Abständen von der Sensoranordnung an den Tachographen 10 gesendet werden. Das Signal "Fahrt/keine Fahrt" kann jedoch auch vom Tachographen als Datensignal explizit angefordert werden, dies ist beispielsweise der Fall, um den Zustand "keine Fahrt" bei dem Nichtempfangen von Wegeimpulsen zu verifizieren.

Wie in Fig. 1 durch den gestrichelten Signalpfeil angedeutet ist, kann das Signal von der Signalaufbereitung auch zusätzlich oder anstelle der Zuführung zur Schnittstelle 13 an die Bearbeitungseinheit 14 geliefert werden, in der es von der Verschlüsselungslogik in zu dem Inkrement entsprechender Weise verschlüsselt wird.

Mit 15 ist eine Spannungsversorgungseinheit bezeichnet, die üblicherweise mit einer Spannungsversorgung im Tachographen 10 verbunden ist. Der erste Sensor 2 liefert, wie oben ausgeführt, am Ausgang 11 der Schnittstelle 9 das so genannte Echtzeitsignal, das an den Tachographen 10 übermittelt wird. Weiterhin wird das Signal des ersten Sensors 2 der Bearbeitungseinheit 14 zugeführt, in der das Inkrement berechnet wird, das von dem Tachographen angefordert wird oder regelmäßig über die Datenleitung von der Sensoranordnung verschlüsselt an den Tachographen 10 übertragen wird. Weiterhin wird das unabhängige Signal des Mikrofons regelmäßig oder auf Anforderung über die Datenleitung an den Tachographen 10 gesendet. Dieser umfasst eine Vergleichs- und Plausibilisierungseinheit (nicht dargestellt), die das übermittelte Inkrement mit einem aus den direkt übertragenen Wegeimpulsen (Echtzeitsignal) selbständig ermittelten Inkrement vergleicht bzw. plausibilisiert und Fehlermeldungen bei Abweichungen erzeugt. Außerdem wird in der Vergleichs- und Plausibilisierungseinheit des Tachographen 10 eine Plausibilisierung des Echtzeitsignals mit dem in ein Datensignal umgewandelten Mikrofonsignal durchgeführt, d.h. bei fehlenden Wegeimpulsen muss das Mikrofon ein Standgeräusch erfassen, das das Signal "keine Fahrt" repräsentiert. Auch hier wird bei Abweichungen eine Fehlermeldung generiert.

Eine Vergleichs- und Plausibilisierungsschaltung kann auch in der Bearbeitungseinheit 14 der Sensoranordnung vorgesehen sein, wobei jedoch nur ein Vergleich bzw. eine Plausibilisierung zwischen dem Mikrofonsignal "Fahrt/keine Fahrt" und dem Signal von der Signalaufbereitung 7, d.h. den Wegeimpulsen vom Sensor 2 oder dem entsprechenden Inkrement vorgenommen wird. Auch hier wird bei Abweichungen zwischen dem Zustand "Standgeräusch" vom Sensor 3 und dem entsprechenden Zustand "keine Impulse bzw. keine Inkrementerhöhung" vom Sensor ein Fehler an den Tachographen 10 gemeldet oder alternativ Fehler in der Sensoranordnung provoziert oder das Inkrement rückgesetzt werden oder dergleichen, was der Tachograph erkennen kann.

Dieses im Zusammenhang mit Fig. 1 beschriebene Ausführungsbeispiel hat den Vorteil einer vollständigen Kompatibilität zur aktuellen Schnittstellenspezifikation zwischen der Sensoranordnung und dem gemäß ISO 16844-3 standardisierten Tachographen.

In dem oben beschriebenen Ausführungsbeispiel wird in der Signalaufbereitung 8 des Signals vom Mikrofon der typische Signalverlauf, z.B. das Geräuschspektrum des stehenden Fahrzeugs, d.h. das Standgeräusch und das vom Mikrofon 3 erfasste Fahrgeräusch mit einem Schwellenwert verglichen und entsprechend dem Ergebnis des Vergleichs das Signal "Fahrt/keine Fahrt" ausgegeben. Dazu wird ein vorher festgelegter Schwellenwert in einem in der Signalaufbereitung 8 vorgesehenen Speicher gespeichert. Dabei kann der Signalverlauf aber auch lediglich eine Amplitude bei einer Frequenz oder der Amplitudenverlauf über einem Frequenzbereich sein.

In einem nicht dargestellten Ausführungsbeispiel können ein oder mehrere Amplituden Frequenzspektren als individuelles Geräusch des Getriebes des speziellen Fahrzeugs als Referenzcharakteristika gespeichert werden. Bei der Fahrt oder im Stand werden dann jeweils die aktuell aufgenommenen Geräuschspektren mit denen es als individuelles Geräusch des Getriebes gespeicherten verglichen und bei Abweichungen werden Fehler generiert. Es wird somit eine Art elektronische Plombe für das Getriebe realisiert.

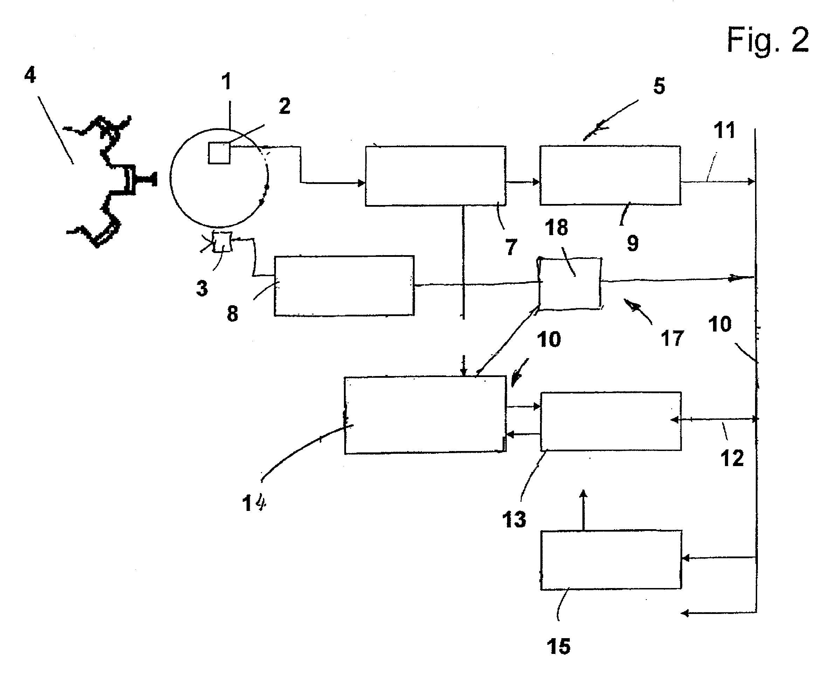

In Fig. 2 ist ein weiteres Ausführungsbeispiel so dargestellt, das sich der zweite Signalpfad, der nunmehr mit 16 bezeichnet wird, nur auf die Bearbeitungseinheit 14 bezieht, die das Rechtecksignal von der Signalaufbereitung 7 empfängt und entsprechend dem vorherigen Ausführungsbeispiel das Inkrement bildet und verschlüsselt und die Datenschnittstelle 13 mit dem Datenausgang 12 umfasst. Es ist nunmehr ein dritter Datenpfad 17 hinzugekommen, der das Mikrofon 3 bzw. den akustischen Sensor, die zugehörige Signalaufbereitung 8, die derjenigen im vorigen Ausführungsbeispiel entsprechen kann und die das Signal "Fahrt/keine Fahrt" liefert und eine getrennte Verschlüsselungseinheit 18, wobei der Schlüssel für diese Verschlüsselungseinheit 18 von der Bearbeitungseinheit 14 geliefert werden kann. Von diesem zusätzlichen Signalpfad 17 wird in entsprechender Weise an den Tachographen 10 gesendet.

In den beschriebenen Ausführungsbeispielen wurde der Sensor 3 als akustischer Sensor, z.B. Mikrofon, realisiert. Es können aber auch Schwingungssensoren, beispielsweise solche mit integrierter seismischen Masse verwendet werden, die den Geräuschfrequenzspektren entsprechende Schwingungsspektren liefern, so dass eine Auswertung analog ist.

## Patentansprüche

1. Tachographenanordnung für ein Fahrzeug mit einem Tachographen und einer Sensoranordnung zum Erfassen eines Zustands des Fahrzeugs, die einen Sensor zum Detektieren eines Parameters des Fahrzeugs und Erzeugen eines über eine analoge Signalleitung an den Tachographen zu übertragendes Echtzeitsignals und eine Bearbeitungsvorrichtung zur Erzeugung von über eine Datenleitung an den Tachographen zu übertragenden Datensignalen aus dem Sensorsignal aufweist,
**dadurch gekennzeichnet, dass** in der Sensoranordnung ein zweiter Sensor (3) benachbart zum ersten Sensor (2) angeordnet ist, der unabhängig vom ersten Sensor (2) ist und auf einem zum ersten Sensor (2) unterschiedlichen Erfassungsprinzip arbeitet und dessen Signale über eine zusätzliche Leitung (17) oder die Datenleitung (12) an den Tachographen (10) übertragbar ist.

2. Tachographenanordnung nach Anspruch 1, **dadurch gekennzeichnet, dass** der erste Sensor (2) ein als Wege- oder Drehzahlsensor ausgebildeter Magnetfeldsensor und der zweite Sensor (3) ein akustischer oder Schwingungssensor ist.

3. Tachographenanordnung nach Anspruch 1, **dadurch gekennzeichnet, dass** die Bearbeitungsvorrichtung eine Verschlüsselungseinheit aufweist.

4. Tachographenanordnung nach einem der Ansprüche 1 bis 3, **dadurch gekennzeichnet, dass** die Bearbeitungseinheit eine Zähleinheit zur Bildung eines Inkrements aus den Signalen des ersten Sensors über einen vorgegebenen Zeitraum aufweist.

5. Tachographenanordnung nach einem der Ansprüche 1 bis 4, **dadurch gekennzeichnet, dass** der zweite Sensor (3) mit einer Signalverarbeitungseinheit (8) verbunden ist, die durch Vergleich eines aktuellen Signals des zweiten Sensors mit einem mindestens vorher gespeicherten Vergleichssignal oder Schwellenwert ein Signal "Fahrt/keine Fahrt" erzeugt.

6. Tachographenanordnung nach einem der Ansprüche 1 bis 5, **dadurch gekennzeichnet, dass** die Bearbeitungsvorrichtung (14) eine Plausibilisierungseinheit aufweist, die einen Plausibilitätsvergleich zwischen den Signalen des ersten Sensors (2) und den Signalen des zweiten Sensors (3) vornimmt.

7. Tachographenanordnung nach einem der Ansprüche 1 bis 6, **dadurch gekennzeichnet, dass** die von dem zweiten Sensor (3) gelieferten Signale in Datensignale umwandelbar sind und über die Datenleitung übertragbar sind.

8. Tachographenanordnung nach einem der Ansprüche 1 bis 6, **dadurch gekennzeichnet, dass** die Signale des zweiten Sensors (3) nach Verarbeitung in einer Signalverarbeitungseinheit (8) gegebenenfalls über eine Verschlüsselungseinheit (18) über eine zusätzliche Signalleitung (17) an den Tachographen übertragbar sind.

9. Tachographenanordnung nach einem der Ansprüche 2 bis 8, **dadurch gekennzeichnet, dass** der zweite Sensor (3) mit einer einen Speicher aufweisenden Signalverarbeitungseinheit (8) verbunden ist, wobei der Speicher mindestens eine von dem zweiten Sensor erzeugte Geräusch- oder Schwingungscharakteristik als Referenzcharakteristik speichert, die mit aktuell erfassten Geräusch- oder Schwingungscharakteristika vergleichbar ist und bei Abweichung ein Fehlersignal erzeugbar ist.

10. Sensoranordnung für einen Tachographen zum Erfassen eines Zustandes eines Fahrzeugs mit einem Sensor zum Detektieren eines Parameters des Fahrzeugs und Erzeugen eines über eine analoge Signalleitung an den Tachographen übertragbares Echtzeitsignals und eine Bearbeitungsvorrichtung zur Erzeugung von über eine Datenleitung an den Tachographen übertragbaren Datensignalen aus dem Sensorsignal aufweist, **dadurch gekennzeichnet, dass** ein zweiter Sensor (3) benachbart zum ersten Sensor (2) angeordnet ist, wobei der zweite Sensor (3) unabhängig vom ersten Sensor (2) ist und auf einem zum ersten Sensor (2) unterschiedlichen Erfassungsprinzip arbeitet und dessen Signale über eine zusätzliche Leitung oder die Datenleitung an den Tachographen übertragbar sind.

11. Sensoranordnung nach Anspruch 10, **dadurch gekennzeichnet, dass** der erste Sensor (2) ein als Wege- oder Drehzahlsensor ausgebildeter Magnetfeldsensor und der zweite Sensor (3) ein akustischer oder Schwingungssensor ist.

12. Sensoranordnung nach Anspruch 10 oder Anspruch 11, **dadurch gekennzeichnet, dass** die Bearbeitungsvorrichtung (14) eine Verschlüsselungseinheit aufweist.

13. Sensoranordnung nach einem der Ansprüche 10 bis 12, **dadurch gekennzeichnet, dass** die Bearbeitungseinheit (14) eine Zähleinheit zur Bildung eines Inkrements aus den Signalen des ersten Sensors (2) über einen vorgegebenen Zeitraum aufweist.

14. Sensoranordnung nach einem der Ansprüche 10 bis 13, **dadurch gekennzeichnet, dass** der zweite Sensor (3) mit einer Signalverarbeitungseinheit (8) verbunden ist, die durch Vergleich eines aktuellen Signals des zweiten Sensors mit einem mindestens vorher gespeicherten Vergleichssignal oder Schwellenwert ein Signal "Fahrt/keine Fahrt" erzeugt.

15. Sensoranordnung nach einem der Ansprüche 10 bis 14, **dadurch gekennzeichnet, dass** die Bearbeitungsvorrichtung (14) eine Plausibilisierungseinheit aufweist, die einen Plausibilitätsvergleich zwischen den Signalen des ersten Sensors (2) und den Signalen des zweiten Sensors (3) vornimmt.

16. Sensoranordnung nach einem der Ansprüche 10 bis 15, **dadurch gekennzeichnet, dass** die von dem zweiten Sensor (3) gelieferten Signale in Datensignale umwandelbar sind und über die Datenleitung übertragbar sind.

17. Sensoranordnung nach einem der Ansprüche 10 bis 16, **dadurch gekennzeichnet, dass** die Signale des zweiten Sensors (3) nach Verarbeitung in einer Signalverarbeitungseinheit (8) gegebenenfalls über eine Verschlüsselungseinheit (18) über eine zusätzliche Signalleitung (17) an den Tachographen übertragbar sind.

18. Sensoranordnung nach einem der Ansprüche 11 bis 17, **dadurch gekennzeichnet, dass** der zweite Sensor (3) mit einer einen Speicher aufweisenden Signalverarbeitungseinheit (8) verbunden ist, wobei der Speicher mindestens eine von dem zweiten Sensor erzeugte Geräusch- oder Schwingungscharakteristik als Referenzcharakteristik speichert, die mit aktuell erfassten Geräusch- oder Schwingungscharakteristika vergleichbar ist und bei Abweichung ein Fehlersignal erzeugbar ist.
